# EUROPEAN PATENT SPECIFICATION

(11) **EP 3 672 221 B1**
(45) Date of publication and mention of the grant of the patent: **27.04.2022**
(21) Application number: 18852881.4
(22) Date of filing: 17.07.2018
(51) Int. Cl.: H04N 5/225, H04N 5/235, H04N 5/243

(54) **IMAGING DEVICE AND IMAGING METHOD**
BILDGEBENDE VORRICHTUNG UND BILDGEBENDES VERFAHREN
DISPOSITIF D'IMAGERIE ET PROCÉDÉ D'IMAGERIE

(30) Priority: 07.09.2017 CN 201710801780
(43) Date of publication of application: 24.06.2020
(73) Proprietor: Huawei Technologies Co., Ltd., Longgang District Shenzhen, Guangdong 518129 (CN)
(72) Inventor: ZHU, Liyu, Shenzhen Guangdong 518129 (CN); LIN, Yiyu, Shenzhen Guangdong 518129 (CN); XU, Peng, Shenzhen Guangdong 518129 (CN)
(74) Representative: Kreuz, Georg Maria
(86) International application number: PCT/CN2018/095898
(87) International publication number: WO 2019/047620

(56) References cited:
- EP-A1- 2 866 445
- CN-A- 105 827 965
- CN-A- 106 060 364
- CN-A- 106 488 201
- US-A1- 2003 048 493
- US-A1- 2007 051 876
- US-A1- 2011 019 032
- US-B1- 6 788 338
- US-B1- 9 386 230

## Description

### TECHNICAL FIELD

The present invention relates to the field of image technologies, and in particular, to an imaging apparatus and an imaging method.

### BACKGROUND

Since a camera technology is invented, a problem that illuminance dynamic range (that is, a change range of illuminance in a photographing area) adaptation is overly narrow has persisted. For example, when a user performs photographing from indoors to outdoors through a window, an average of indoor illuminance is hundreds of lux, while illuminance of outdoor light in a sunny day can reach thousands of lux. In such a light environment, indoor and outdoor objects cannot be photographed both clearly. For example, in the foregoing case, outdoor light is dominant, and therefore an exposure time of a camera is relatively short, for example, 1/4000s. However, such an exposure time is exactly appropriate to obtain a clear image of an outdoor object, while this exposure time is insufficient for an indoor object for which an image of the indoor object cannot be seen clearly due to low light indoors. An existing ordinary camera generally has a backlight compensation function, to increase overall luminance by increasing an exposure time and a luminance gain, so that a clear image of an indoor object can be obtained while an overly pale image of an outdoor object is obtained due to overexposure. In other words, the existing ordinary camera can be used in only a limited illuminance dynamic range, or an image in only partial illuminance can be seen in a relatively large illuminance dynamic range.

A digital wide dynamic range technology in the prior art is a technology to perform digital enhancement on a collected image according to an image algorithm by adjusting exposure. Technically, the digital wide dynamic range technology uses intelligent processing according to an algorithm. When an overexposed area or an underexposed area is present in a scene, luminance of the scene is adjusted for better viewing by automatically adjusting image parameters such as an aperture, a shutter, and a gain. In addition, a digital image enhancement algorithm is used to brighten a dark part in the image, and suppress a highlighted part in the image, so as to reduce image contrast. However, the digital wide dynamic range technology is essentially a process of subsequently enhancing an image according to an algorithm. There may be the following disadvantages at an algorithm level. Although the digital wide dynamic range technology can be used to brighten the dark part of the image, because a signal-to-noise ratio output by an image sensor decreases significantly on the dark part, noise is amplified after the image enhancement, and information covered by the noise cannot be restored through image enhancement. For the bright part of the image, lost details cannot be restored through image enhancement due to image overflow resulting from overexposure.

US 2003/0048493A1 discloses a high sensitivity monochrome image sensor optically coupled to receive a first sub-beam having a first light intensity produces a plurality of monochrome image pixels representative of an imaged object. A color image sensor optically coupled to receive a second sub-beam having a second light intensity produces a plurality of color image pixels representative of the imaged object.

US 2007/0051876A1 discloses an imager having superior separation properties in which a visible image and an infrared image can be independently and simultaneously obtained.

In conclusion, due to restriction of the development of the existing technology, for a camera, a bright part and a dark part cannot be both considered in a scene with a relatively large illuminance dynamic range in a real environment. Therefore, an imaging technology is urgently required currently, to resolve a problem of narrow light range adaptation in a conventional photographing technology.

### SUMMARY

This application provides an imaging apparatus and an imaging method, to resolve a problem of narrow light range adaptation of a conventional photographing technology.

According to a first aspect, this application provides an imaging apparatus, where the imaging apparatus includes a photographing apparatus, a light splitting apparatus, a plurality of sensors, and an image processing apparatus, where
the photographing apparatus is configured to obtain light reflected by an object, and transmitthe obtained light into the light splitting apparatus;
the light splitting apparatus is disposed on an emergent surface of the photographing apparatus, and is configured to split, into light transmitted from a plurality of emergent surfaces of the light splitting apparatus, the light transmitted by the photographing apparatus into the light splitting apparatus;
the plurality of sensors are disposed on the plurality of emergent surfaces of the light splitting apparatus, and are configured to receive light transmitted from corresponding emergent surfaces, and generate preprocessed images based on the received light; and
the image processing apparatus is connected to the plurality of sensors, and is configured to fuse the preprocessed images generated by the plurality of sensors to obtain an output image; wherein the light splitting apparatus comprises a first emergent surface and a second emergent surface; a sensor disposed on the first emergent surface is a monochrome image sensor, and a sensor disposed on the second emergent surface is a color image sensor;
wherein the image processing apparatus is further configured to: if determining that a gain of the color image sensor is greater than or equal to a preset gain threshold, determine that a scene is a low light scene; or if determining that the gain of the color image sensor is less than the preset gain threshold, determine that a scene is a wide dynamic scene.

In this way, because the light splitting apparatus is used in this application, light can be split into light transmitted from the plurality of emergent surfaces of the light splitting apparatus, the sensors disposed on the plurality of emergent surfaces separately perform imaging on all split components, and the image processing apparatus fuseds imagings corresponding to all the components. In this way, the imaging apparatus provided in this application requires only one exposure to achieve fusion of images corresponding to a plurality of components to obtain a wide-dynamic-range image. Compared with a prior-art multi-exposure manner, inherent disadvantages of ghost and blur existing in a fused image obtained in the multi-exposure manner are effectively resolved, thereby improving practicability of a wide dynamic range image in an actual surveillance environment. In addition, only one exposure is required, so that a problem of low light performance of a composite image obtained in the prior-art multi-exposure manner is avoided.

In a possible design, the image processing apparatus is further configured to adjust gains and/or shutter time of the plurality of sensors based on the preprocessed images generated by the plurality of sensors.

In this way, the image processing apparatus can adjust the gains and/or the shutter time of the plurality of sensors in real time based on the preprocessed images generated by the plurality of sensors, so that the imaging apparatus can effectively adapt to a dynamic change of light.

In a possible design, the light splitting apparatus is specifically configured to split, based on light intensity and/or a light spectrum into the light transmitted from the plurality of emergent surfaces of the light splitting apparatus, the light transmitted by the photographing apparatus into the light splitting apparatus.

In this way, the light splitting apparatus may split light based on the light intensity and/or the light spectrum, thereby scientifically and reasonably splitting the light, and laying a good foundation for subsequent fusing to obtain the output image.

In a possible design,
if the light transmitted into the light splitting apparatus is all visible light, the light splitting apparatus splits, based on a specified proportion into visible light transmitted from the first emergent surface and visible light transmitted from the second emergent surface, the light transmitted into the light splitting apparatus; or
if the light transmitted into the light splitting apparatus includes visible light and infrared light, the light splitting apparatus splits, into light transmitted from the first emergent surface and light transmitted from the second emergent surface, the light transmitted into the light splitting apparatus, where the light transmitted from the first emergent surface includes infrared light and visible light, and the light transmitted from the second emergent surface includes visible light.

In a possible design, the light photographed by the photographing apparatus includes infrared light and visible light;
the imaging apparatus further includes an infrared cut-off filter, where the infrared cut-off filter is disposed between an incident surface of the light splitting apparatus and an emergent surface of the photographing apparatus, and the infrared cut-off filter is connected to the image processing apparatus; and
the image processing apparatus is further configured to: in the wide dynamic scene, control the infrared cut-off filter to cut off the infrared light, so that all the light transmitted into the light splitting apparatus is visible light; and in the low light scene, control the infrared cut-off filter to transmit the infrared light and the visible light, so that the light transmitted into the light splitting apparatus includes infrared light and visible light.

In a possible design, the light photographed by the photographing apparatus includes infrared light and visible light;
the imaging apparatus further includes the infrared cut-off filter, where the infrared cut-off filter is disposed between the first emergent surface of the light splitting apparatus and the monochrome image sensor, and the infrared cut-off filter is connected to the image processing apparatus; and
the image processing apparatus is further configured to: in the wide dynamic scene, control the infrared cut-off filter to cut off the infrared light, so that all the light transmitted into the monochrome image sensor is visible light; in the low light scene, control the infrared cut-off filter to transmit the infrared light and the visible light, so that the light transmitted into the monochrome image sensor includes infrared light and visible light; and in a dehazing scene, control the infrared cut-off filter to cut off the visible light, so that all the light transmitted into the monochrome image sensor is infrared light.

In a possible design, the plurality of preprocessed images generated by the plurality of sensors include a monochrome image and a color image; and
the image processing apparatus is specifically configured to: separately decompose luminance components of the plurality of preprocessed images into high-frequency components and low-frequency components, and decompose color components of the color image of the plurality of preprocessed images into a chrominance component and a saturation component; obtain a fused high-frequency component based on the high-frequency components of the plurality of preprocessed images, and obtain a fused low-frequency component based on the low-frequency components of the plurality of preprocessed images; and obtain a fused luminance component based on the fused high-frequency component and the fused low-frequency component, and further obtain an output image based on the fused luminance component, the chrominance component, and the saturation component.

According to a second aspect, this application provides an imaging method, where the imaging method is applicable to the imaging apparatus in any one of the foregoing designs, and the method includes:
obtaining, by a photographing apparatus, light reflected by an object;
splitting, by a light splitting apparatus, the obtained light to obtain a plurality of light sets;
obtaining, by a plurality of sensors, based on light in any one of the plurality of light sets, a preprocessed image corresponding to the any one light set; and
fusing a plurality of preprocessed images corresponding to the plurality of light sets to obtain an output image;
wherein the plurality of sensors comprises a monochrome image sensor and a color image sensor, the method further comprising:
   determining that a scene is a low light scene if determining that a gain of the color image sensor is greater than or equal to a preset gain threshold; or determining
   that a scene is a wide dynamic scene if determining that the gain of the color image sensor is less than the preset gain threshold.

In this way, in this application, the obtained light reflected by the object is split, the light can be split to obtain the plurality of light sets, the preprocessed images corresponding to the plurality of light sets are generated based on the light in the plurality of light sets, and the plurality of preprocessed images are fuse to obtain the output image. In this way, the imaging method provided in this application requires only one exposure to achieve fusion of images corresponding to a plurality of components to obtain a wide-dynamic-range image. Compared with a prior-art multi-exposure manner, inherent disadvantages of ghost and blur existing in a fused image obtained in the multi-exposure manner are effectively resolved, thereby improving practicability of a wide dynamic range image in an actual surveillance environment. In addition, only one exposure is required, so that a problem of low light performance of a composite image obtained in the prior-art multi-exposure manner is avoided.

In a possible design, the splitting the obtained light to obtain a plurality of light sets includes:
splitting the obtained light based on light intensity and/or a light spectrum to obtain the plurality of light sets.

In a possible design, if the obtained light is all visible light, the obtained light is split based on a specified proportion, to obtain a first light set and a second light set; or
if the obtained light includes visible light and infrared light, the obtained light is split to obtain a third light set and a fourth light set, where the third light set includes infrared light and the visible light, and the fourth light set includes visible light.

In a possible design, the obtained light includes visible light and infrared light; and
the splitting the obtained light to obtain a plurality of light sets includes:
if it is determined that a scene is a wide dynamic scene, cutting off the infrared light from the obtained light, and splitting the visible light in the obtained light to obtain the plurality of light sets.

In a possible design, the obtained light includes visible light and infrared light; and
the obtaining, based on light in any one of the plurality of light sets, a preprocessed image corresponding to the any one light set includes:
if it is determined that a scene is a wide dynamic scene, cutting off the infrared light from the any one light set, and obtaining, based on visible light from the any one light set, the preprocessed image corresponding to the any one light set; or
if it is determined that a scene is a dehazing scene, cutting off visible light from the any one light set, and obtaining, based on infrared light from the any one light set, the preprocessed image corresponding to the any one light set.

In a possible design, the plurality of preprocessed images include a monochrome image and a color image; and
the fusing a plurality of preprocessed images corresponding to the plurality of light sets to obtain an output image includes:
separately decomposing luminance components of the plurality of preprocessed images into high-frequency components and low-frequency components, and decomposing a color component of the color image of the plurality of preprocessed images into a chrominance component and a saturation component;
obtaining a fused high-frequency component based on the high-frequency components of the plurality of preprocessed images, and obtaining a fused low-frequency component based on the low-frequency components of the plurality of preprocessed images; and
obtaining a fused luminance component based on the fused high-frequency component and the fused low-frequency component, and further obtaining the output image based on the fused luminance component, the chrominance component, and the saturation component.

### BRIEF DESCRIPTION OF DRAWINGS

FIG. 1 is a schematic diagram of a conventional imaging apparatus;
FIG. 2a is a schematic structural diagram of an imaging apparatus according to Embodiment 1 of this application;
FIG. 2b is a schematic diagram of splitting light by a light splitting apparatus;
FIG. 3 is a schematic structural diagram of an imaging apparatus according to Embodiment 2 of this application;
FIG. 4A and FIG. 4B are a schematic diagram of a working process in a wide dynamic scene;
FIG. 5A and FIG. 5B are a schematic diagram of a working process in a low light scene;
FIG. 6 is a schematic structural diagram of an imaging apparatus according to Embodiment 3 of this application;
FIG. 7A and FIG. 7B are a schematic diagram of a working process in a dehazing scene;
FIG. 8 is a schematic flowchart corresponding to an imaging method according to Embodiment 4 of this application;
FIG. 9 is a schematic flowchart corresponding to a fusing method according to this application; and
FIG. 10 is a schematic structural diagram of an imaging apparatus according to Embodiment 5 of this application.

### DESCRIPTION OF EMBODIMENTS

The following describes the embodiments of this application in detail with reference to the accompanying drawings of this specification.

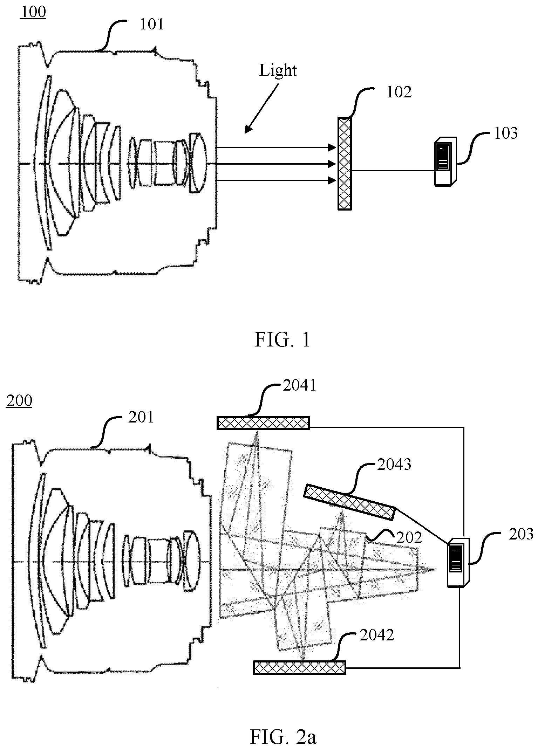

FIG. 1 is a schematic diagram of a conventional imaging apparatus. As shown in FIG. 1, the conventional imaging apparatus 100 includes a photographing apparatus 101, an image sensor 102, and a general-purpose image processing (image signal processor, ISP) module. External light is focused on the image sensor 102 by using the photographing apparatus 101. The image sensor 102 senses the light and generates an electrical signal, and transfers the electrical signal to the general-purpose ISP module 103 for processing.

The conventional imaging apparatus in FIG. 1 can be used in only a limited illuminance dynamic range. To resolve this problem, a wide dynamic solution provided in the prior art uses a wide-dynamic-range image that is combined through multi-exposure. An essence of the solution is to use a digital algorithm to combine images that are exposed for a plurality of times, to increase the dynamic range. A simplest application is to use a manner of a combination of a long-frame exposure and a short-frame exposure. Luminance of a long-exposure image may be used to present dark details of an image, while a short exposure can ensure that a highlighted part of the image is not overexposed. After fusing is performed on the image according to a fusing algorithm, the details of both the dark part and the bright part of the image can be retained, so that an effect of extending the dynamic range of the image is achieved.

It can be learned from the foregoing content that, the prior-art solution is to use a multi-exposure manner on a basis of the hardware structure shown in FIG. 1, to try to increase a wide dynamic range of an image. However, because the multi-exposure manner is used, when there is a moving object in a scene or when a camera is not in a static state, due to a time difference, there is a difference between an image that is exposed currently and the image that is exposed previously. Therefore, the difference between the image that is exposed currently and the image that is exposed previously needs to be considered when the fusing algorithm is used. Currently, inherent disadvantages of ghost and blur in image fusing caused by an error occurring in fusing between the exposed images with the difference cannot be completely avoided. In addition, because one frame of image is exposed for a plurality of times, low light performance of a fused image is lower than that of a single long-exposure image.

In view of this, in this application, the hardware structure of the imaging apparatus in the conventional photographing technology is improved. A light splitting apparatus is introduced into the imaging apparatus, to provide a now solution to resolving a problem of narrow light range adaptation in the conventional photographing technology. The imaging apparatus provided in this application may be applied to cameras and video surveillance devices that have different structures, or applied to cameras, for example, applied to a field of photographing using a mobile phone. This is not specifically limited.

### Embodiment 1

FIG. 2a is a schematic structural diagram of an imaging apparatus according to Embodiment 1 of this application. As shown in FIG. 2a, the imaging apparatus 200 includes a photographing apparatus 201, a light splitting apparatus 202, an image processing apparatus 203, and a plurality of sensors, for example, a sensor 2041, a sensor 2042, and a sensor 2043 that are shown in FIG. 2a. The following provides detailed descriptions separately.
(1) The photographing apparatus 201 is configured to obtain light reflected by an object, and transmitthe obtained light into the light splitting apparatus. Further, the photographing apparatus 201 may be an infrared confocal camera. Therefore, the light reflected by the object that is obtained by the photographing apparatus 201 includes infrared light and visible light.
(2) The light splitting apparatus 202 is disposed on an emergent surface of the photographing apparatus, and is configured to split, into light transmitted from a plurality of emergent surfaces of the light splitting apparatus 202, the light transmitted by the photographing apparatus into the light splitting apparatus 202. Herein, in a possible implementation, the light splitting apparatus may include one or more beam splitter prisms. In specific implementation, a film may be coated on the light-splitting prism to split the light.

Further, the light splitting apparatus 202 is specifically configured to split, based on light intensity and/or a light spectrum into the light transmitted from the plurality of emergent surfaces of the light splitting apparatus 202, the light transmitted by the photographing apparatus into the light splitting apparatus 202. In other words, the light splitting apparatus may split, based on the light intensity, the light spectrum, or a combination of the light intensity and the light spectrum into the light transmitted from the plurality of emergent surfaces of the light splitting apparatus, the light transmitted by the photographing apparatus into the light splitting apparatus. Specifically, the following three cases are included. (1) The light splitting apparatus may split, based on the light intensity into the light transmitted from the plurality of emergent surfaces of the light splitting apparatus, the light transmitted by the photographing apparatus into the light splitting apparatus. (2) The light splitting apparatus may split, based on the light spectrum into the light transmitted from the plurality of emergent surfaces of the light splitting apparatus, the light transmitted from the photographing apparatus into the light splitting apparatus. (3) The light splitting apparatus may split, based on the light intensity and the light spectrum into the light transmitted from the plurality of emergent surfaces of the light splitting apparatus, the light transmitted by the photographing apparatus into the light splitting apparatus.

For (3), for example, if the light transmitted by the photographing apparatus 201 into the light splitting apparatus 202 includes infrared light and visible light, the light splitting apparatus may separate the infrared light and the visible light from each other based on the light spectrum, and may split, based on the light intensity and based on a specified proportion, the visible light into the light transmitted from the plurality of emergent surfaces of the light splitting apparatus 202. The specified proportion may be set depending on an actual situation by a person skilled in the art based on experience, and is not specifically limited.

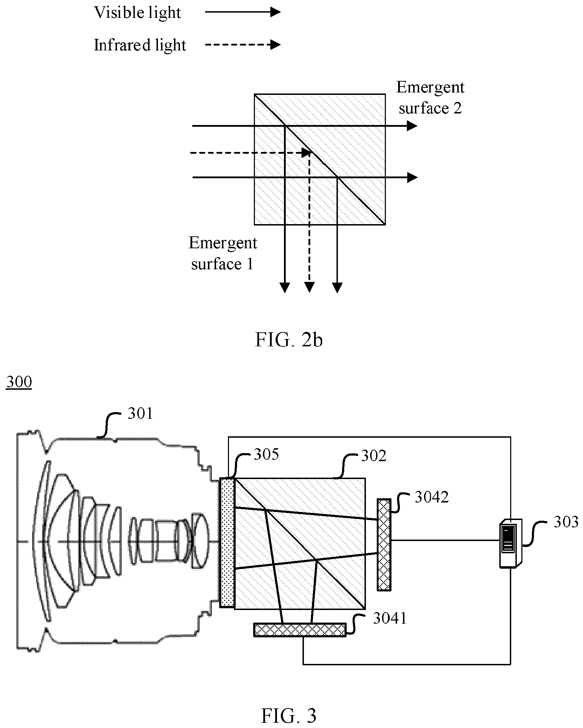

For example, the light splitting apparatus 202 has two emergent surfaces: an emergent surface 1 and an emergent surface 2. FIG. 2b is a schematic diagram of splitting light by a light splitting apparatus. As shown in FIG. 2b, light transmitted into the light splitting apparatus 202 includes infrared light and visible light. The light splitting apparatus splits the transmitted light into infrared light and visible light, and splits the visible light into light in two directions based on intensity of 1:1, so that the infrared light and 50% of the visible light are transmitted from the emergent surface 1 together, and the other 50% of the visible light is transmitted from the emergent surface 2. Alternatively, the light splitting apparatus may split the infrared light based on intensity of 2:3, so that 40% of the infrared light and 50% of the visible light are transmitted from the emergent surface 1 together, and 60% of the infrared light and 50% of the visible light are transmitted from the emergent surface 2.

It should be noted that, the foregoing described light splitting solution is merely an example, and the proportion may be specifically set based on an actual requirement in specific implementation.

(3) The plurality of sensors are disposed on the plurality of emergent surfaces of the light splitting apparatus, and are configured to receive the light transmitted from corresponding emergent surfaces, and generate preprocessed images based on the received light. Specifically, any one of the plurality of sensors may convert an optical signal into an electrical signal, convert the electrical signal into a pixel, and further form the preprocessed image.

Herein, the plurality of sensors may include a monochrome image sensor and a color image sensor. A quantity of the sensors may be set based on an actual requirement by a person skilled in the art, for example, the quantity may be set to two or three. This is not specifically limited. If the quantity of the sensors is three, two monochrome image sensors and one color image sensor may be included, or one monochrome image sensor and two color image sensors may be included.

In this application, the quantity of the sensors may be the same as a quantity of the emergent surfaces of the light splitting apparatus, so that one sensor is disposed on each emergent surface; or the quantity of the sensors may be less than the quantity of the emergent surfaces of the light splitting apparatus, so that no corresponding sensor may be disposed on an emergent surface. The following mainly describes a case in which the quantity of the sensors is the same as the quantity of the emergent surfaces of the light splitting apparatus.

(4) The image processing apparatus 203 is connected to the plurality of sensors (that is, electrically connected to the plurality of sensors), and is configured to fuse the preprocessed images generated by the plurality of sensors to obtain an output image. In this application, the image processing apparatus 203 may be a graphics processing unit (GPU). This is not specifically limited. The imaging apparatus 200 may include one or more image processing apparatuses. That the imaging apparatus 200 includes one image processing apparatus is merely used as an example for description herein.

Further, the image processing apparatus 203 is further configured to adjust gains and/or shutter time of the plurality of sensors based on the preprocessed images generated by the plurality of sensors. In an example 1, the image processing apparatus may collect statistics about a luminance histogram based on a preprocessed image obtained by any one of the plurality of sensors, and adjust a gain of the sensor based on the luminance histogram, to improve an underexposed part in the histogram or suppress an overexposed part in the histogram. In an example 2, the image processing apparatus may further determine whether an overexposure degree is close to an underexposure degree in the luminance histograms of the preprocessed images obtained by the plurality of sensors. If a scene is underexposed overall, the image processing apparatus may increase the shutter time of the plurality of sensors; or if a scene is overexposed overall, the image processing apparatus may reduce the shutter time of the plurality of sensors.

The image processing apparatus may further determine different scenes based on the gains of the plurality of sensors. There may be a plurality of specific determining manners. For example, the image processing apparatus may determine a scene based on a gain of any one color sensor of the plurality of sensors. In a possible implementation, if the gain of the color image sensor is greater than or equal to a preset gain threshold, it is determined that the scene is a low light scene; or if the gain of the color image sensor is less than the preset gain threshold, it is determined that the scene is a wide dynamic scene. In another possible implementation, if the gain of the color image sensor is greater than a preset gain threshold, it is determined that the scene is a low light scene; or if the gain of the color image sensor is less than or equal to the preset gain threshold, it is determined that the scene is a wide dynamic scene.

The preset gain threshold may be set depending on an actual situation by a person skilled in the art based on experience, and is not specifically limited.

In this application, the image processing apparatus 203 may fused, in a plurality of manners, the preprocessed images generated by the plurality of sensors to obtain the output image. In a possible implementation, because the plurality of preprocessed images may include a monochrome image and a color image, the image processing apparatus may separately decompose luminance components of the plurality of preprocessed images into high-frequency components and low-frequency components, and decompose a color component of the color image of the plurality of preprocessed images into a chrominance component and a saturation component; and further obtains a fused high-frequency component based on the high-frequency components of the plurality of preprocessed images, and obtains a fused low-frequency component based on the low-frequency components of the plurality of preprocessed images. The image processing apparatus obtains a fused luminance component based on the fused high-frequency component and the fused low-frequency component, and further obtains the output image based on the fused luminance component, the chrominance component, and the saturation component.

Specifically, because a low-frequency component of an image is related to overall image illuminance, fusing may be implemented in a weighted average manner. To be specific, weighted average is performed on the low-frequency components of the plurality of preprocessed images to obtain the fused low-frequency component. A weight is related to a current scene. For example, in a wide dynamic scene currently, weights of the low-frequency components of all the preprocessed images may be the same; or in a low light scene currently, a weight of a low-frequency component of the color image may be greater than a weight of a low-frequency component of the monochrome image. A high-frequency component is represented as image detail information. Therefore, when the high-frequency components of the plurality of preprocessed images are fused, a largest high-frequency component may be directly selected as the fused high-frequency component, to effectively ensure an effect of the output image obtained after fusing.

It should be noted that the imaging apparatus in this application may further include an image signal processing (ISP) module, and the ISP module may be configured to perform an image processing algorithm, an image optimization parameter configuration, and the like. This is not specifically limited.

Further, the ISP module may be disposed after the image processing apparatus 203, so that after fusing the plurality of preprocessed images, the image processing apparatus 203 outputs the obtained image to the ISP module, and the ISP module performs further processing. In this case, the ISP module may be an existing general-purpose ISP module. Alternatively, the ISP module may be disposed before the image processing apparatus 203, so that the ISP module processes the plurality of preprocessed images, and outputs a plurality of processed images to the image processing apparatus 203; and the image processing apparatus 203 fuseds the plurality of images.

Because the light splitting apparatus is used in this application, light can be split into light transmitted from the plurality of emergent surfaces of the light splitting apparatus, and sensors disposed on the plurality of emergent surfaces separately perform imaging corresponding to each split component, so that the image processing apparatus fuseds imagings corresponding to all the components. In this way, the imaging apparatus provided in this application requires only one exposure to achieve fusion of images corresponding to a plurality of components to obtain a wide-dynamic-range image. Compared with a prior-art multi-exposure manner, inherent disadvantages of ghost and blur existing in a fused image obtained in the multi-exposure manner are effectively resolved, thereby improving practicability of a wide dynamic range image in an actual surveillance environment. In addition, only one exposure is required, so that a problem of low light performance of a composite image obtained in the prior-art multi-exposure manner is avoided.

For the imaging apparatus described in Embodiment 1, in specific implementation, another apparatus such as an infrared cut-off filter may be added to the imaging apparatus, so that the light splitting solution can be set based on an actual requirement more conveniently and effectively, to further increase a light adaptation range. The following separately describes two possible specific embodiments (Embodiment 2 and Embodiment 3).

### Embodiment 2

FIG. 3 is a schematic structural diagram of an imaging apparatus according to Embodiment 2 of this application. As shown in FIG. 3, the imaging apparatus 300 includes a photographing apparatus 301, a light splitting apparatus 302, an image processing apparatus 303, a first sensor 3041, a second sensor 3042, and an infrared cut-off filter 305. Compared with FIG. 2a, only the infrared cut-off filter 305 is added in FIG. 3. For specific implementations of other parts, refer to the descriptions related to FIG. 2a. Details are not described herein again.

The infrared cut-off filter 305 is disposed between an incident surface of the light splitting apparatus 302 and an emergent surface of the photographing apparatus 301, and the infrared cut-off filter 305 is connected to the image processing apparatus 303. The image processing apparatus may control the infrared cut-off filter to be in the following two modes: a mode 1 in which infrared light is cut off and visible light is transmitted; and a mode 2 in which infrared light and visible light are transmitted. In another implementation, the image processing apparatus may further control the infrared cut-off filter to be in another mode, for example, in a mode 3 in which visible light is cut off and infrared light is transmitted.

In this application, the first sensor 3041 is a monochrome image sensor, and the second sensor 3042 is a color image sensor. The image processing apparatus 303 may determine different scenes based on a gain of the color image sensor. For example, if determining that the gain of the color image sensor is greater than or equal to a preset gain threshold, the image processing apparatus 303 determines that a scene is a low light scene; or if determining that the gain of the color image sensor is less than the preset gain threshold, the image processing apparatus 303 determines that a scene is a wide dynamic scene. The preset gain threshold may be set by a person skilled in the art based on experience depending on an actual situation, and is not specifically limited.

Further, in the wide dynamic scene, the image processing apparatus controls the infrared cut-off filter to be in the mode 1, to cut off the infrared light and transmit the visible light, so that light transmitted into the light splitting apparatus is all visible light. In the low light scene, the image processing apparatus controls the infrared cut-off filter to be in the mode 2, to transmit infrared light and visible light, so that light transmitted into the light splitting apparatus includes infrared light and visible light, and low light performance is improved. Therefore, the infrared cut-off filter is added, and the infrared cut-off filter is set to be in different modes in different scenes, so that a light adaptation range can be increased, and final imaging quality can be effectively ensured.

The following separately describes processes of adjusting the sensors by the image processing apparatus in the wide dynamic scene and the low dynamic scene.

### (1) The wide dynamic scene

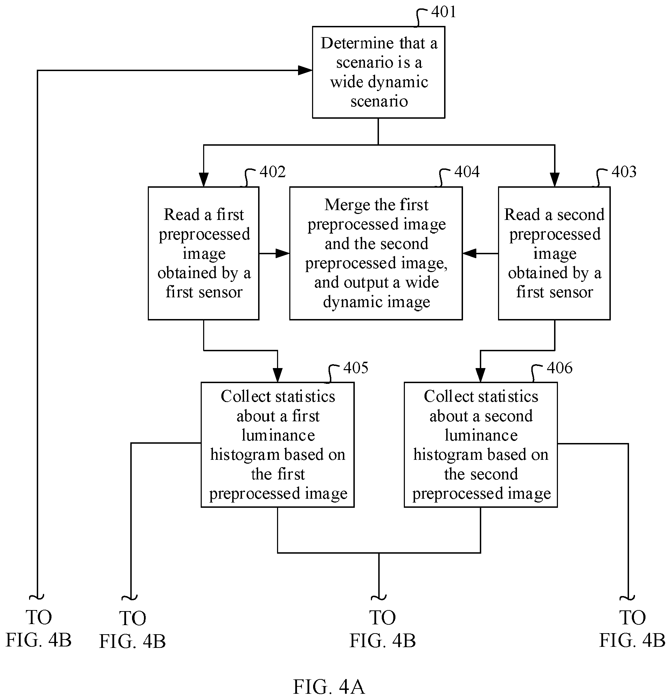

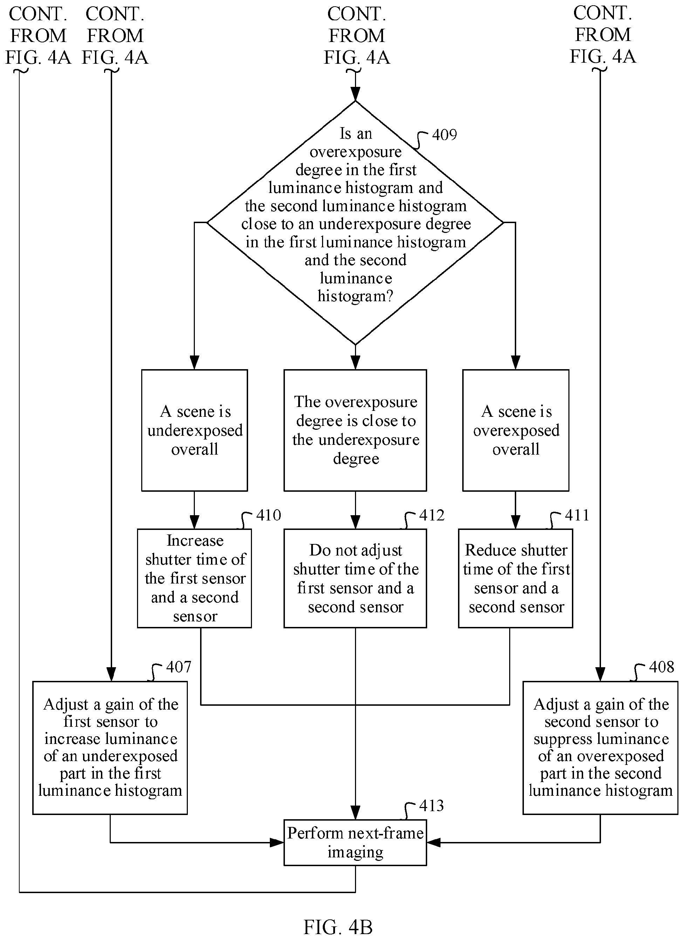

In this scene, light transmitted into the light splitting apparatus is all visible light. The light splitting apparatus splits, based on a specified proportion (for example, 1:1), the light into visible light transmitted from a first emergent surface and visible light transmitted from a second emergent surface. After receiving the light transmitted from the first emergent surface, the first sensor generates a first preprocessed image. After receiving the light transmitted from the second emergent surface, the second sensor generates a second preprocessed image. The image processing apparatus fuseds the first preprocessed image and the second preprocessed image, and outputs a wide dynamic range image, and adjusts gains and/or shutter time of the first sensor and the second sensor based on the first preprocessed image and the second preprocessed image. The following provides detailed descriptions with reference to FIG. 4A and FIG. 4B.

FIG. 4A and FIG. 4B are a schematic diagram of a working process in the wide dynamic scene. As shown in FIG. 4A and FIG. 4B, the following steps are included.

Step 401: The image processing apparatus determines, based on a gain of the second sensor, that a scene is the wide dynamic scene.

Step 402: The image processing apparatus reads the first sensor to obtain the first preprocessed image.

Step 403: The image processing apparatus reads the first sensor to obtain the second preprocessed image.

Step 404: The image processing apparatus fuseds the first preprocessed image and the second preprocessed image, and outputs the wide dynamic range image.

Step 405: The image processing apparatus collects statistics about a first luminance histogram based on the first preprocessed image.

Step 406: The image processing apparatus collects statistics about a second luminance histogram based on the second preprocessed image.

Step 407: The image processing apparatus adjusts a gain of the first sensor based on the first luminance histogram, to increase luminance of an underexposed part in the first luminance histogram.

Step 408: The image processing apparatus adjusts the gain of the second sensor based on the second luminance histogram, to suppress luminance of an overexposed part in the second luminance histogram.

Step 409: The image processing apparatus determines whether an overexposure degree in the first luminance histogram and the second luminance histogram is close to an underexposure degree in the first luminance histogram and the second luminance histogram. If a scene is underexposed overall, the image processing apparatus performs step 410; if a scene is overexposed overall, the image processing apparatus performs step 411; or if the overexposure degree is close to the underexposure degree, the image processing apparatus performs step 412. It should be noted that there may be a plurality of determining criteria in this step. The determining criteria may be specifically set based on an actual requirement by a person skilled in the art, and are not specifically listed herein.

Step 410: Increase the shutter time of the first sensor and the second sensor.

Step 411: Reduce the shutter time of the first sensor and the second sensor.

Step 412: Do not adjust the shutter time of the first sensor and the second sensor.

Step 413: Perform next-frame imaging.

It can be learned from the foregoing content that the image processing apparatus adjusts the gains and/or the shutter time of the first sensor and the second sensor in real time based on the preprocessed images obtained by the first sensor and the second sensor, so that the imaging apparatus can effectively adapt to a dynamic change of light.

It should be noted that: (1) The foregoing step numbers are merely an example of an execution process, and do not specifically limit a sequence of the steps. For example, the foregoing step 402 and step 403 may be performed simultaneously, or step 403 may be performed before step 402, and this is not specifically limited. (2) The foregoing working process of the image processing apparatus in the wide dynamic scene shown in FIG. 4A and FIG. 4B is merely an example for description. In specific implementation, other variations may be included, and this is not specifically limited.

### (2) The low light scene

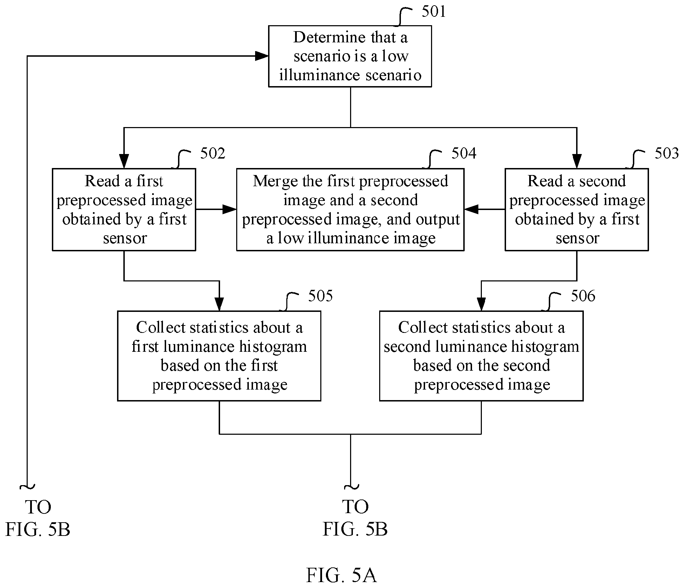

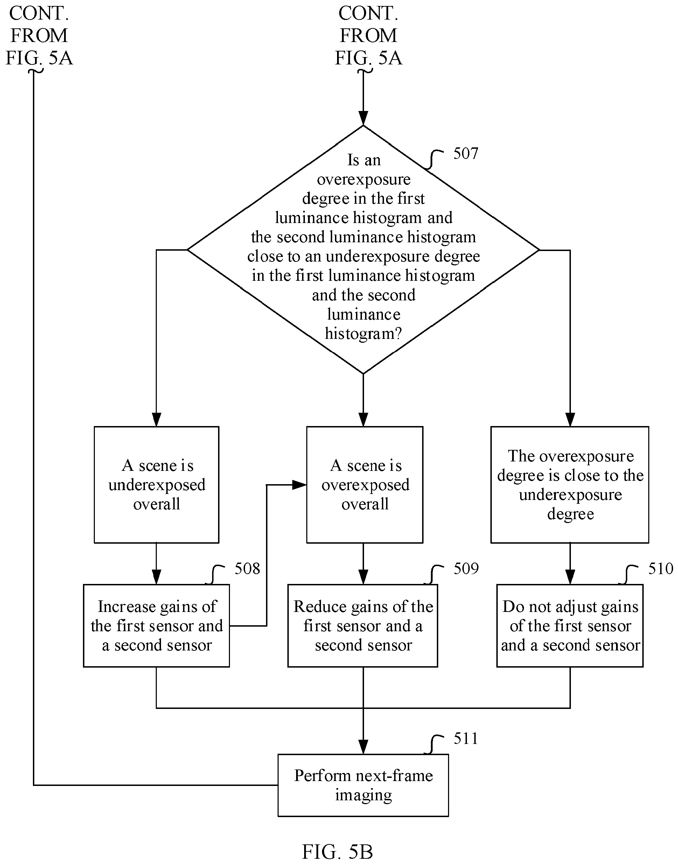

In this scene, light transmitted into the light splitting apparatus includes infrared light and visible light. The light splitting apparatus separates the infrared light and the visible light from each other, and splits the visible light based on a specified proportion (for example, 1:1), so that the infrared light and 50% of the visible light are transmitted from the first emergent surface, and the other 50% of the visible light is transmitted from the second emergent surface. After receiving the light transmitted from the first emergent surface, the first sensor generates a first preprocessed image. After receiving the light transmitted from the second emergent surface, the second sensor generates a second preprocessed image. The image processing apparatus fuseds the first preprocessed image and the second preprocessed image, and outputs a low-illuminance image, and adjusts gains and/or shutter time of the first sensor and the second sensor based on the first preprocessed image and the second preprocessed image. The following provides detailed descriptions with reference to FIG. 5A and FIG. 5B.

FIG. 5A and FIG. 5B are a schematic diagram of a working process in the low light scene. As shown in FIG. 5A and FIG. 5B, the following steps are included.

Step 501: The image processing apparatus determines, based on a gain of the second sensor, that a scene is the low light scene.

Step 502: The image processing apparatus reads the first sensor to obtain the first preprocessed image.

Step 503: The image processing apparatus reads the first sensor to obtain the second preprocessed image.

Step 504: The image processing apparatus fuseds the first preprocessed image and the second preprocessed image, and outputs the low-illuminance image.

Step 505: The image processing apparatus collects statistics about a first luminance histogram based on the first preprocessed image.

Step 506: The image processing apparatus collects statistics about a second luminance histogram based on the second preprocessed image.

Step 507: The image processing apparatus determines whether an overexposure degree in the first luminance histogram and the second luminance histogram is close to an underexposure degree in the first luminance histogram and the second luminance histogram. If a scene is underexposed overall, the image processing apparatus performs step 508; if a scene is overexposed overall, the image processing apparatus performs step 509; or if the overexposure degree is close to the underexposure degree, the image processing apparatus performs step 510. It should be noted that there may be a plurality of determining criteria in this step. The determining criteria may be specifically set based on an actual requirement by a person skilled in the art, and are not specifically listed herein.

Step 508: Increase the gains of the first sensor and the second sensor.

Step 509: Reduce the gains of the first sensor and the second sensor.

Step 510: Do not adjust the gains of the first sensor and the first sensor.

Step 511: Perform next-frame imaging.

It can be learned from the foregoing content that the image processing apparatus adjusts the gains of the first sensor and the second sensor in real time based on the preprocessed images obtained by the first sensor and the second sensor, so that the imaging apparatus can effectively adapt to a dynamic change of light.

It should be noted that: (1) The foregoing step numbers are merely an example of an execution process, and do not specifically limit a sequence of the steps. For example, the foregoing step 502 and step 503 may be performed simultaneously, or step 503 may be performed before step 502, and this is not specifically limited. (2) The foregoing working process of the image processing apparatus in the low light scene shown in FIG. 5A and FIG. 5B is merely an example for description, and is mainly applicable to a case in which the shutter time of the first sensor and the second sensor is maximum. In specific implementation, in the low light scene, adjustment may also be performed based on the process shown in FIG. 4A and FIG. 4B, or other manners may be used, and this is not specifically limited.

### Embodiment 3

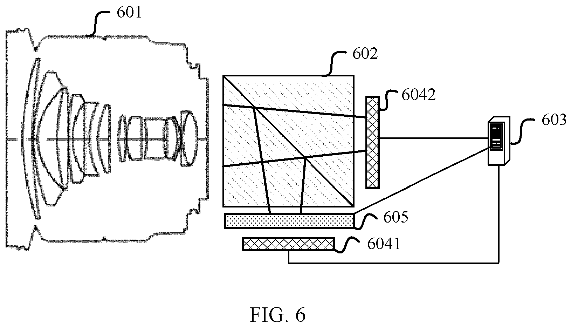

FIG. 6 is a schematic structural diagram of an imaging apparatus according to Embodiment 3 of this application. As shown in FIG. 6, the imaging apparatus 600 includes a photographing apparatus 601, a light splitting apparatus 602, an image processing apparatus 603, a first sensor 6041, a second sensor 6042, and an infrared cut-off filter 605. The first sensor 6041 is a monochrome image sensor, and the second sensor 6042 is a color image sensor. Compared with FIG. 2a, only the infrared cut-off filter 605 is added in FIG. 6. For specific implementations of other parts, refer to the descriptions related to FIG. 2a. Details are not described herein again.

The infrared cut-off filter 605 is disposed between a first emergent surface of the light splitting apparatus 602 and the monochrome image sensor 6041, and the infrared cut-off filter 605 is connected to the image processing apparatus 603. The image processing apparatus may control the infrared cut-off filter to be in the following three modes: a mode 1 in which infrared light is cut off and visible light is transmitted; a mode 2 in which infrared light and visible light are transmitted; and a mode 3 in which visible light is cut off and infrared light is transmitted.

In this application, the image processing apparatus 606 may determine different scenes based on a gain of the color image sensor. For example, if determining that the gain of the color image sensor is greater than or equal to a preset gain threshold, the image processing apparatus 606 determines that a scene is a low light scene; or if determining that the gain of the color image sensor is less than the preset gain threshold, the image processing apparatus 606 determines that a scene is a wide dynamic scene. The image processing apparatus may further determine whether a scene is a dehazing scene currently. There may be a plurality of criteria for specifically determining whether a scene is a dehazing scene, and are not listed herein. The preset gain threshold may be set depending on an actual situation by a person skilled in the art based on experience, and is not specifically limited.

Further, in the wide dynamic scene, the image processing apparatus controls the infrared cut-off filter to be in the mode 1, to cut off infrared light and transmit visible light, so that light transmitted into the first sensor (the monochrome image sensor) is all visible light. In the low light scene, the image processing apparatus controls the infrared cut-off filter to be in the mode 2, to transmit infrared light and visible light, so that light transmitted into the first sensor includes infrared light and visible light, and low light performance is improved. In the dehazing scene, it is considered that a transmittance of infrared light in a hazy condition is greater than visible light, and therefore the image processing apparatus may control the infrared cut-off filter to be in the mode 3, to cut off visible light and transmit infrared light, so that the first sensor can obtain a comparatively clear image, the second sensor can obtain a visible light color image with blurred details, and a comparatively clear color dehazing image can be obtained through image fusing. Therefore, the infrared cut-off filter is added, and the infrared cut-off filter is set to be in different modes in different scenes, so that a light adaptation range can be increased, and final imaging quality can be effectively ensured.

In this embodiment, for the processes of adjusting the sensors by the image processing apparatus in the wide dynamic scene and the low dynamic scene, refer to the descriptions about FIG. 4A and FIG. 4B and FIG. 5A and FIG. 5B in Embodiment 2, and details are not described herein again. The following describes a process of adjusting the sensors by the image processing apparatus only in the dehazing scene.

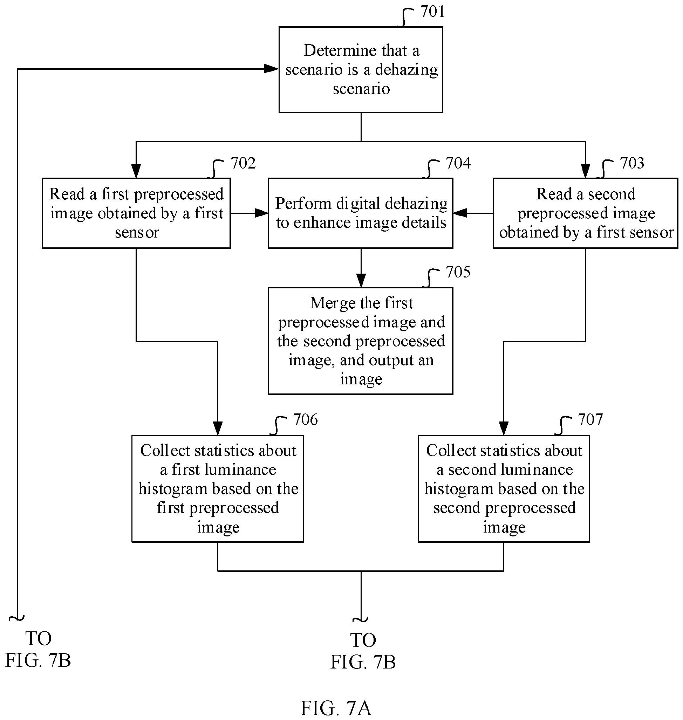

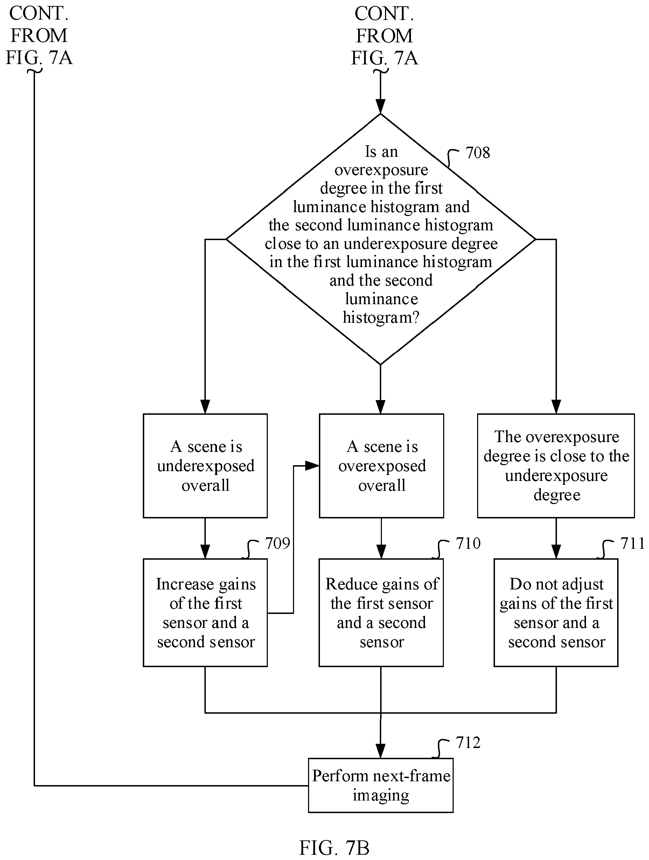

FIG. 7A and FIG. 7B are a schematic diagram of a working process in the dehazing scene. As shown in FIG. 7A and FIG. 7B, the following steps are included.

Step 701: Determined that a scene is the dehazing scene.

Step 702: Read a first preprocessed image obtained by the first sensor.

Step 703: Read a second preprocessed image obtained by the first sensor.

Step 704: Perform digital dehazing processing on the first preprocessed image and the second preprocessed image, to enhance image details.

Step 705: fused the first preprocessed image and the second preprocessed image that are obtained after digital dehazing processing, and output an image.

Step 706: Collect statistics about a first luminance histogram based on the first preprocessed image.

Step 707: Collect statistics about a second luminance histogram based on the second preprocessed image.

Step 708: Determine whether an overexposure degree in the first luminance histogram and the second luminance histogram is close to an underexposure degree in the first luminance histogram and the second luminance histogram. If a scene is underexposed overall, perform step 709; if a scene is overexposed overall, perform step 710; or if the overexposure degree is close to the underexposure degree, perform step 711. It should be noted that there may be a plurality of determining criteria in this step. The determining criteria may be specifically set based on an actual requirement by a person skilled in the art, and are not specifically listed herein.

Step 712: Perform next-frame imaging.

It can be learned from the foregoing content that the image processing apparatus adjusts gains of the first sensor and the second sensor in real time based on the preprocessed images obtained by the first sensor and the second sensor, so that the imaging apparatus can effectively adapt to a dynamic change of light.

It should be noted that: (1) The foregoing step numbers are merely an example of an execution process, and do not specifically limit a sequence of the steps. For example, the foregoing step 702 and step 703 may be performed simultaneously, or step 703 may be performed before step 702, and this is not specifically limited. (2) The foregoing working process of the image processing apparatus in the wide dynamic scene shown in FIG. 7A and FIG. 7B is merely an example for description. In specific implementation, other variations may be included, and this is not specifically limited.

### Embodiment 4

Based on a same concept, this application further provides an imaging method. The imaging method is applicable to the imaging apparatus described in any one of the foregoing embodiments.

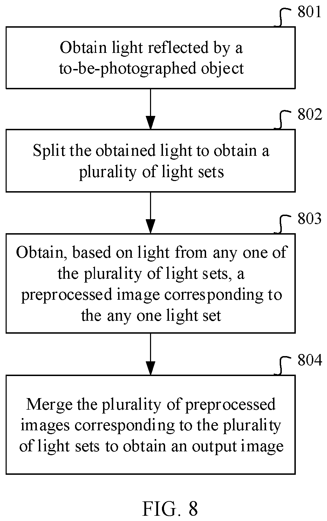

FIG. 8 is a schematic flowchart corresponding to the imaging method according to this application. As shown in FIG. 8, the imaging method includes the following steps.

Step 801: Obtain light reflected by an object.

Herein, in specific implementation, the light reflected by the object may be obtained by a photographing apparatus, and the obtained light may include infrared light and visible light. The photographing apparatus may be specifically the photographing apparatus described in Embodiment 1, Embodiment 2, or Embodiment 3.

Step 802: Split the obtained light to obtain a plurality of light sets.

Herein, in specific implementation, the obtained light may be split by a light splitting apparatus, and the light in the plurality of light sets is transmitted from a plurality of emergent surfaces of the light splitting apparatus. The light splitting apparatus may be specifically the light splitting apparatus described in Embodiment 1, Embodiment 2, or Embodiment 3.

In this application, the obtained light may be split based on light intensity and/or a light spectrum, and a quantity of the obtained light sets may be set based on an actual requirement. In an example 1, if the obtained light is all visible light, the obtained light is split based on a specified proportion, to obtain a first light set and a second light set. In an example 2, if the obtained light includes visible light and infrared light, the obtained light is split to obtain a third light set and a fourth light set. The third light set includes infrared light and visible light, and the fourth light set includes visible light.

Further, in a wide dynamic scene, infrared light in the obtained light is cut off, and visible light in the obtained light is split to obtain the plurality of light sets. In a low light scene, the obtained infrared light and the obtained visible light may be split to obtain the plurality of light sets.

Step 803: Obtain, based on light in any one of the plurality of light sets, a preprocessed image.

Herein, in specific implementation, the plurality of sensors may be disposed, and the plurality of sensors may receive the light in the plurality of light sets, and generate the preprocessed images based on the received light. The sensor may be specifically the sensor described in Embodiment 1, Embodiment 2, or Embodiment 3.

Further, in the wide dynamic scene, infrared light from the any one light set may be cut off, and the preprocessed image corresponding to the any one light set is obtained based on the visible light from the any one light set.

In the dehazing scene, visible light from the any one light set may be cut off, and the preprocessed image corresponding to the any one light set is obtained based on the infrared light from the any one light set.

Step 804: fused the plurality of preprocessed images corresponding to the plurality of light sets to obtain an output image.

Herein, in specific implementation, the image processing apparatus may fused the plurality of preprocessed images corresponding to the plurality of light sets, to obtain the output image. The image processing apparatus may be specifically the image processing apparatus described in Embodiment 1, Embodiment 2, or Embodiment 3.

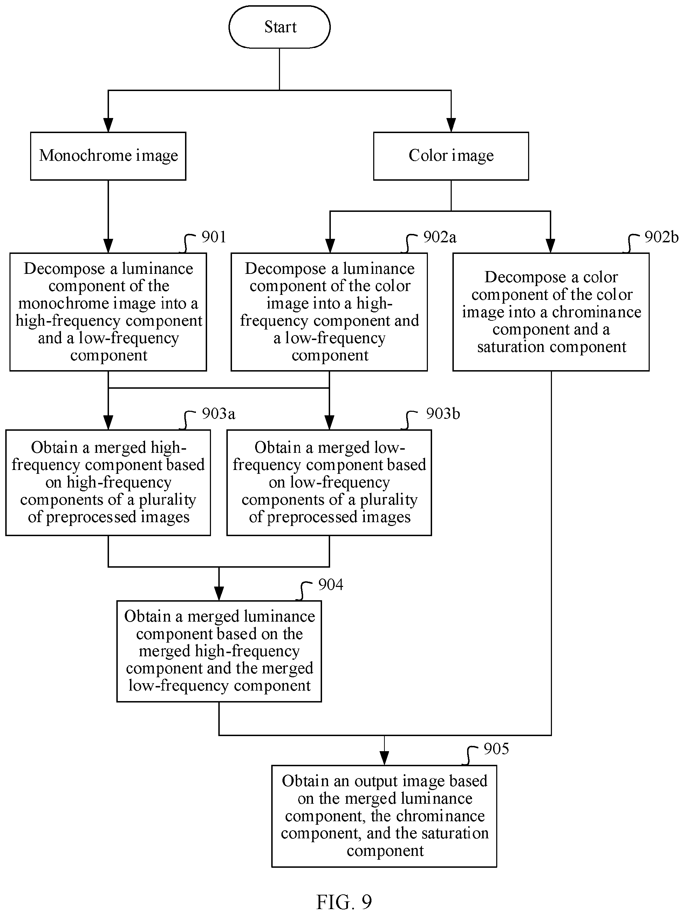

Specifically, the plurality of preprocessed images include a color image and a monochrome image. There may be a plurality of methods for fusing the plurality of preprocessed images in this application. The following specifically describes a possible implementation with reference to FIG. 9.

FIG. 9 is a schematic flowchart corresponding to a fusing method according to this application. As shown in FIG. 9, the following steps are included.

Step 901: Decompose a luminance component of the monochrome image of the plurality of preprocessed images into a high-frequency component and a low-frequency component.

Step 902a: Decompose a luminance component of the color image of the plurality of preprocessed images into a high-frequency component and a low-frequency component.

Step 902b: Decompose a color component of the color image into a chrominance component and a saturation component.

Step 903a: Obtain a fused high-frequency component based on the high-frequency components of the plurality of preprocessed images.

Step 903a: Obtain a fused low-frequency component based on the low-frequency components of the plurality of preprocessed images.

Step 904: Obtain a fused luminance component based on the fused high-frequency component and the fused low-frequency component.

Step 905: Obtain an output image based on the fused luminance component, the chrominance component, and the saturation component.

It should be noted that the step numbers shown in FIG. 9 are merely an example of an execution process, and do not specifically limit a sequence of the steps. For example, the foregoing step 902a and step 902b may be performed simultaneously, and this is not specifically limited.

In this application, the obtained light reflected by the object is split, so that the light can be split into the plurality of light sets, and the preprocessed images corresponding to the plurality of light sets are generated based on the light in the plurality of light sets. Then the plurality of preprocessed images are fuse to obtain the output image. In this way, the imaging method provided in this application requires only one exposure to achieve fusion of images corresponding to a plurality of components to obtain a wide-dynamic-range image. Compared with a prior-art multi-exposure manner, inherent disadvantages of ghost and blur existing in a fused image obtained in the multi-exposure manner are effectively resolved, thereby improving practicability of a wide dynamic range image in an actual surveillance environment. In addition, only one exposure is required, so that a problem of low light performance of a composite image obtained in the prior-art multi-exposure manner is avoided.

### Embodiment 5

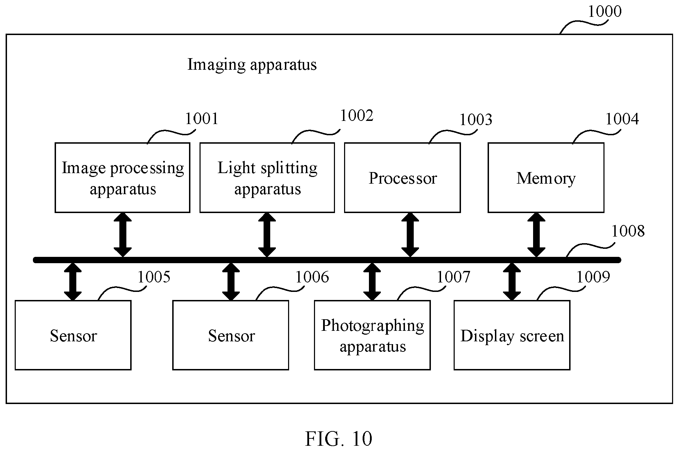

This application further provides an imaging apparatus. As shown in FIG. 10, the imaging apparatus 1000 includes an image processing apparatus 1001, a light splitting apparatus 1002, a processor 1003, a memory 1004, a plurality of sensors (for example, a sensor 1005 and a sensor 1006 shown in FIG. 10), a photographing apparatus 1007, and a bus 1008.

The memory 1004 is configured to store program code to be executed by the processor.

The processor 1003 is configured to invoke the program code stored in the memory 1004 to perform the following functions:
in response to a user's photographing startup action, obtaining, by using the photographing apparatus 1007, light reflected by an object, and transmitting the obtained light into the light splitting apparatus 1002; splitting, by the light splitting apparatus 1002 into light transmitted from a plurality of emergent surfaces of the light splitting apparatus 1002, the light transmitted into the light splitting apparatus 1002; receiving, by using the plurality of sensors, light transmitted from corresponding emergent surfaces, and generating preprocessed images based on the received light; and fusing, by using the image processing apparatus 1001, the preprocessed images generated by the plurality of sensors to obtain an output image.

The memory may include a RAM, and may further include a non-volatile memory, for example, at least one magnetic disk storage. The processor executes an application program stored in the memory, to implement the foregoing functions.

In a possible design, the image processing apparatus 1001, the light splitting apparatus 1002, the processor 1003, the memory 1004, the plurality of sensors, and the photographing apparatus 1007 may be connected to each other by using the bus 1008. The bus 1008 may be a peripheral component interconnect (PCI) bus, an extended industry standard architecture (EISA) bus, or the like. The bus may be classified into an address bus, a data bus, a control bus, and the like.

In a possible design, the imaging apparatus further includes a display screen 1009, and the functions executed by the processor 1003 further include:
in response to a user's image display action, displaying the output image on the display screen 1009.

All or some of the foregoing embodiments may be implemented by using software, hardware, firmware, or any combination thereof. When the software is used to implement the embodiments, all or some of the embodiments may be implemented in a form of a program product. The program product includes one or more program instructions. When the program instructions are loaded and executed on a device (for example, a computer or another programmable data processing device), the procedures or functions according to the embodiments of the present invention are all or partially generated. The instructions may be stored in a readable storage medium. The readable storage medium may be any usable medium that can be read, or a data storage device that includes one or more usable medium integrated servers, data centers, or the like. The usable medium may be a magnetic medium (for example, a floppy disk, a hard disk, or a magnetic tape), an optical medium (for example, a DVD), a semiconductor medium (for example, a solid-state disk (SSD), or the like.

The embodiments of the present invention is described with reference to the flowcharts and/or block diagrams of the method, the device (system), and the program product according to the embodiments of the present invention. It should be understood that program instructions may be used to implement each process and/or each block in the flowcharts and/or the block diagrams and a combination of a process and/or a block in the flowcharts and/or the block diagrams. These program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These program instructions may be loaded onto a computer or other programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to embodiments of the present invention without departing from the scope of the claims.

This application is intended to cover these modifications and variations provided that they fall within the scope of protection defined by the following claims.

## Claims

1. An imaging apparatus, wherein the imaging apparatus comprises a photographing apparatus (301), a light splitting apparatus (302), a plurality of sensors (3041, 3042), and an image processing apparatus (303), wherein
the photographing apparatus (301) is configured to obtain light reflected by an object, and transmit the obtained light into the light splitting apparatus (302);
the light splitting apparatus (302) is disposed on an emergent surface of the photographing apparatus (301), and is configured to split, into light transmitted from a plurality of emergent surfaces of the light splitting apparatus (302), the light transmitted by the photographing apparatus (301) into the light splitting apparatus (302);the plurality of sensors (3041, 3042) are disposed on the plurality of emergent surfaces of the light splitting apparatus (302), and are configured to receive light transmitted from corresponding emergent surfaces, and generate preprocessed images based on the received light; and
the image processing apparatus is connected to the plurality of sensors (3041, 3042), and is configured to fuse the preprocessed images generated by the plurality of sensors (3041, 3042) to obtain an output image; wherein the light splitting apparatus (302) comprises a first emergent surface and a second emergent surface; a sensor disposed on the first emergent surface is a monochrome image sensor (3041), and a sensor disposed on the second emergent surface is a color image sensor (3042);
**characterized in that**
the image processing apparatus is further configured to: if determining that a gain of the color image sensor (3042) is greater than or equal to a preset gain threshold, determine that a scene is a low light scene, wherein the processing apparatus is configured to fuse the preprocessed images to obtain a low-illuminance output image; or if determining that the gain of the color image sensor (3042) is less than the preset gain threshold, determine that a scene is a wide dynamic scene, wherein the processing apparatus is configured to fuse the preprocessed images to obtain a wide dynamic range output image.

2. The imaging apparatus according to claim 1, wherein the image processing apparatus is further configured to adjust gains and/or shutter speed of the plurality of sensors (3041, 3042) based on the preprocessed images generated by the plurality of sensors (3041, 3042).

3. The imaging apparatus according to claim 1, wherein the light splitting apparatus (302) is specifically configured to split, based on light intensity and/or a light spectrum into light transmitted from the plurality of emergent surfaces of the light splitting apparatus, the light transmitted by the photographing apparatus into the light splitting apparatus (302).

4. The imaging apparatus according to any one of claims 1 to 2, wherein
if the light transmitted into the light splitting apparatus (302) is all visible light, the light splitting apparatus (302) splits, based on a specified proportion into visible light transmitted from the first emergent surface and visible light transmitted from the second emergent surface, the light transmitted into the light splitting apparatus (302); or
if the light transmitted into the light splitting apparatus (302) comprises visible light and infrared light, the light splitting apparatus (302) splits, into light transmitted from the first emergent surface and light transmitted from the second emergent surface, the light transmitted into the light splitting apparatus (302), wherein the light transmitted from the first emergent surface comprises infrared light and visible light, and the light transmitted from the second emergent surface is visible light, or visible light and infrared light.

5. The imaging apparatus according to claim 1, wherein light reflected by an object photographed by the photographing apparatus (301) comprises infrared light and visible light;
the imaging apparatus further comprises an infrared cut-off filter (305), wherein the infrared cut-off filter is disposed between an incident surface of the light splitting apparatus (302) and an emergent surface of the photographing apparatus (301), and the infrared cut-off filter (305) is connected to the image processing apparatus; and
the image processing apparatus is further configured to: in the wide dynamic scene, control the infrared cut-off filter (305) to cut off the infrared light, so that all the light transmitted into the light splitting apparatus (302) is visible light; in the low light scene, control the infrared cut-off filter (305) to transmit the infrared light and the visible light, so that the light transmitted into the light splitting apparatus (302) comprises infrared light and visible light.

6. The imaging apparatus according to claim 1, wherein light photographed by the photographing apparatus (301) comprises infrared light and visible light;
the imaging apparatus further comprises an infrared cut-off filter (305), wherein the infrared cut-off filter (305) is disposed between the first emergent surface of the light splitting apparatus (302) and the monochrome image sensor (3041), and the infrared cut-off filter (305) is connected to the image processing apparatus; and
the image processing apparatus is further configured to: in the wide dynamic scene, control the infrared cut-off filter (305) to cut off the infrared light, so that all the light transmitted into the monochrome image sensor (3041) is visible light; in the low light scene, control the infrared cut-off filter (305) to transmit the infrared light and the visible light, so that the light transmitted into the monochrome image sensor (3041) comprises infrared light and visible light; and in a dehazing scene, control the infrared cut-off filter (305) to cut off the visible light, so that all the light transmitted into the monochrome image sensor (3041) is infrared light.

7. The imaging apparatus according to any one of claims 1 to 6, wherein the plurality of preprocessed images generated by the plurality of sensors (3041, 3042) comprise a monochrome image and a color image; and
the image processing apparatus is specifically configured to: separately decompose luminance components of the plurality of preprocessed images into high-frequency components and low-frequency components, and decompose color components of the color image of the plurality of preprocessed images into a chrominance component and a saturation component; obtain a fused high-frequency component based on the high-frequency components of the plurality of preprocessed images, and obtain a fused low-frequency component based on the low-frequency components of the plurality of preprocessed images; and obtain a fused luminance component based on the fused high-frequency component and the fused low-frequency component, and further obtain an output image based on the fused luminance component, the chrominance component, and the saturation component.

8. An imaging method, wherein the method comprises:
obtaining, by a photographing apparatus, light reflected by an object;
splitting, by a light splitting apparatus, the obtained light to obtain a plurality of light sets with light;
obtaining, by a plurality of sensors, based on light in any one of the plurality of light sets, a preprocessed image corresponding to the any one light set; and
fusing a plurality of preprocessed images corresponding to the plurality of light sets to obtain an output image;
wherein the plurality of sensors comprises a monochrome image sensor and a color image sensor, the method further **characterized by** : determining that a scene is a low light scene if determining that a gain of the color image sensor is greater than or equal to a preset gain threshold, and fusing the plurality of preprocessed images to obtain a low-illuminance output image; or determining that a scene is a wide dynamic scene if determining that the gain of the color image sensor is less than the preset gain threshold, and fusing the plurality of preprocessed images to obtain a wide dynamic range output image.

9. The method according to claim 8, wherein the splitting the obtained light to obtain a plurality of light sets comprises:
splitting the obtained light based on light intensity and/or a light spectrum to obtain the plurality of light sets.

10. The method according to claim 8, wherein if the obtained light is all visible light, the obtained light is split, by the light splitting apparatus, based on a specified proportion, to obtain a first light set and a second light set; or
if the obtained light comprises visible light and infrared light, the obtained light is split, by the light splitting apparatus, to obtain a third light set and a fourth light set, wherein the third light set comprises infrared light and visible light, and the fourth light set is visible light, or infrared light and visible light.

11. The method according to any one of claims 8 to 10, wherein the obtained light comprises visible light and infrared light; and
the splitting, by a light splitting apparatus, the obtained light to obtain a plurality of light sets comprises:
if it is determined, by a sensor, that a scene is a wide dynamic scene, cutting off the infrared light from the obtained light, and splitting the visible light in the obtained light to obtain the plurality of light sets.

12. The method according to any one of claims 8 to 10, wherein the obtained light comprises visible light and infrared light; and
the obtaining, based on light in any one of the plurality of light sets, a preprocessed image corresponding to the any one light set comprises:
if it is determined that a scene is a wide dynamic scene, cutting off infrared light from the any one light set, and obtaining, based on visible light from the any one light set, the preprocessed image corresponding to the any one light set; or
if it is determined that the scene is a dehazing scene, cutting off visible light from the any one light set, and obtaining, based on infrared light from the any one light set, the preprocessed image corresponding to the any one light set.

13. The method according to any one of claims 8 to 12, wherein the plurality of preprocessed images comprise a monochrome image and a color image; and
the fusing a plurality of preprocessed images corresponding to the plurality of light sets to obtain an output image comprises:
separately decomposing luminance components of the plurality of preprocessed images into high-frequency components and low-frequency components, and decomposing a color component of the color image of the plurality of preprocessed images into a chrominance component and a saturation component;
obtaining a fused high-frequency component based on the high-frequency components of the plurality of preprocessed images, and obtaining a fused low-frequency component based on the low-frequency components of the plurality of preprocessed images; and
obtaining a fused luminance component based on the fused high-frequency component and the fused low-frequency component, and further obtaining an output image based on the fused luminance component, the chrominance component, and the saturation component.

## Patentansprüche

1. Bildgebungsvorrichtung, wobei die Bildgebungsvorrichtung eine Fotografiervorrichtung (301), eine Lichtteilungsvorrichtung (302), mehrere Sensoren (3041, 3042) und eine Bildverarbeitungsvorrichtung (303) umfasst, wobei die Fotografiervorrichtung (301) ausgelegt ist zum Erhalten von durch ein Objekt reflektiertem Licht und Senden des erhaltenen Lichts in die Lichtteilungsvorrichtung (302);
die Lichtteilungsvorrichtung (302) auf einer Austrittsoberfläche der Fotografiervorrichtung (301) angeordnet und dafür ausgelegt ist, das durch die Fotografiervorrichtung (301) in die Lichtteilungsvorrichtung (302) gesendete Licht in von mehreren Austrittsoberflächen der Lichtteilungsvorrichtung (302) gesendetes Licht aufzuteilen; die mehreren Sensoren (3041, 3042) auf den mehreren Austrittsoberflächen der Lichtteilungsvorrichtung (302) angeordnet sind und dafür ausgelegt sind, von entsprechenden Austrittsoberflächen gesendetes Licht zu empfangen und auf der Basis des empfangenen Lichts vorverarbeitete Bilder zu erzeugen; und
die Bildverarbeitungsvorrichtung mit den mehreren Sensoren (3041, 3042) verbunden und dafür ausgelegt ist, die durch die mehreren Sensoren (3041, 3042) erzeugten vorverarbeiteten Bilder zu fusionieren, um ein Ausgangsbild zu erhalten; wobei die Lichtteilungsvorrichtung (302) eine erste Austrittsoberfläche und eine zweite Austrittsoberfläche umfasst; ein auf der ersten Austrittsoberfläche angeordneter Sensor ein Monochrom-Bildsensor (3041) ist und ein auf der zweiten Austrittsoberfläche angeordneter Sensor ein Farb-Bildsensor (3042) ist;
**dadurch gekennzeichnet, dass**
die Bildverarbeitungsvorrichtung ferner für Folgendes ausgelegt ist: wenn bestimmt wird, dass ein Verstärkungsfaktor des Farb-Bildsensors (3042) größer oder gleich einer voreingestellten Verstärkungsfaktorschwelle ist, Bestimmen, dass eine Szene eine schlecht beleuchtete Szene ist, wobei die Verarbeitungsvorrichtung dafür ausgelegt ist, die vorverarbeiteten Bilder zu fusionieren, um ein Ausgangsbild mit niedriger Illuminanz zu erhalten;
oder wenn bestimmt wird, dass der Verstärkungsfaktor des Farb-Bildsensors (3042) kleiner als die voreingestellte Verstärkungsfaktorschwelle ist, Bestimmen, dass eine Szene eine sehr dynamische Szene ist, wobei die Verarbeitungsvorrichtung dafür ausgelegt ist, die vorverarbeiteten Bilder zu fusionieren, um ein Ausgangsbild mit großem Dynamikumfang zu erhalten.

2. Bildgebungsvorrichtung nach Anspruch 1, wobei die Bildverarbeitungsvorrichtung ferner ausgelegt ist zum Justieren von Verstärkungsfaktoren und/oder Belichtungszeit der mehreren Sensoren (3041, 3042) auf der Basis der durch die mehreren Sensoren (3041, 3042) erzeugten vorverarbeiteten Bilder.

3. Bildgebungsvorrichtung nach Anspruch 1, wobei die Lichtteilungsvorrichtung (302) speziell ausgelegt ist zum Aufteilen des durch die Fotografiervorrichtung in die Lichtteilungsvorrichtung (302) gesendeten Lichts auf der Basis von Lichtintensität und/oder eines Lichtspektrums in von den mehreren Austrittsoberflächen der Lichtteilungsvorrichtung gesendetes Licht.

4. Bildgebungsvorrichtung nach einem der Ansprüche 1 bis 2, wobei wenn in die Lichtteilungsvorrichtung (302) gesendetes Licht gänzlich sichtbares Licht ist, die Lichtteilungsvorrichtung (302) das in die Lichtteilungsvorrichtung (302) gesendete Licht auf der Basis eines vorgegebenen Anteils in von der ersten Austrittsoberfläche gesendetes sichtbares Licht und von der zweiten Austrittsoberfläche gesendetes sichtbares Licht aufteilt; oder
wenn das in die Lichtteilungsvorrichtung (302) gesendete Licht sichtbares Licht und Infrarotlicht umfasst, die Lichtteilungsvorrichtung (302) das in die Lichtteilungsvorrichtung (302) gesendete Licht in von der ersten Austrittsoberfläche gesendetes Licht und von der zweiten Austrittsoberfläche gesendetes Licht aufteilt, wobei das von der ersten Austrittsoberfläche gesendete Licht Infrarotlicht und sichtbares Licht umfasst und das von der zweiten Austrittsoberfläche gesendete Licht sichtbares Licht oder sichtbares Licht und Infrarotlicht ist.

5. Bildgebungsvorrichtung nach Anspruch 1, wobei durch ein durch die Fotografiervorrichtung (301) fotografiertes Objekt reflektiertes Licht Infrarotlicht und sichtbares Licht umfasst;
die Bildgebungsvorrichtung ferner ein Infrarot-Sperrfilter (305) umfasst, wobei das Infrarot-Sperrfilter zwischen einer Einfallsoberfläche der Lichtteilungsvorrichtung (302) und einer Austrittsoberfläche der Fotografiervorrichtung (301) angeordnet ist und das Infrarot-Sperrfilter (305) mit der Bildverarbeitungsvorrichtung verbunden ist; und
die Bildverarbeitungsvorrichtung ferner dafür ausgelegt ist, in der sehr dynamischen Szene das Infrarot-Sperrfilter (305) zum Sperren des Infrarotlichts zu steuern, so dass alles in die Lichtteilungsvorrichtung (302) gesendete Licht sichtbares Licht ist;
in der schlecht beleuchteten Szene das Infrarot-Sperrfilter (305) zu steuern, das Infrarotlicht und das sichtbare Licht zu senden, so dass das in die Lichtteilungsvorrichtung (302) gesendete Licht Infrarotlicht und sichtbares Licht umfasst.

6. Bildgebungsvorrichtung nach Anspruch 1, wobei durch die Fotografiervorrichtung (301) fotografiertes Licht Infrarotlicht und sichtbares Licht umfasst;
die Bildgebungsvorrichtung ferner ein Infrarot-Sperrfilter (305) umfasst, wobei das Infrarot-Sperrfilter (305) zwischen der ersten Austrittsoberfläche der Lichtteilungsvorrichtung (302) und dem Monochrom-Bildsensor (3041) angeordnet ist und das Infrarot-Sperrfilter (305) mit der Bildverarbeitungsvorrichtung verbunden ist; und
die Bildverarbeitungsvorrichtung ferner dafür ausgelegt ist, in der sehr dynamischen Szene das Infrarot-Sperrfilter (305) zum Sperren des Infrarotlichts zu steuern, so dass alles in den Monochrom-Bildsensor (3041) gesendete Licht sichtbares Licht ist; in der schlecht beleuchteten Szene das Infrarot-Sperrfilter (305) zu steuern, das Infrarotlicht und das sichtbare Licht zu senden, so dass das in den Monochrom-Bildsensor (3041) gesendete Licht Infrarotlicht und sichtbares Licht umfasst; und in einer Entdunstungsszene das Infrarot-Sperrfilter (305) zum Sperren des sichtbaren Lichts zu steuern, so dass alles in den Monochrom-Bildsensor (3041) gesendete Licht Infrarotlicht ist.

7. Bildgebungsvorrichtung nach einem der Ansprüche 1 bis 6, wobei die durch die mehreren Sensoren (3041, 3042) erzeugten mehreren vorverarbeiteten Bilder ein Monochrombild und ein Farbbild umfassen; und
die Bildverarbeitungsvorrichtung speziell ausgelegt ist zum getrennten Zerlegen von Luminanzkomponenten der mehreren vorverarbeiteten Bilder in Hochfrequenzkomponenten und Niederfrequenzkomponenten und Zerlegen von Farbkomponenten des Farbbildes der mehreren vorverarbeiteten Bilder in eine Chrominanzkomponente und eine Sättigungskomponente; Erhalten einer fusionierten Hochfrequenzkomponente auf der Basis der Hochfrequenzkomponenten der mehreren vorverarbeiteten Bilder und Erhalten einer fusionierten Niederfrequenzkomponente auf der Basis der Niederfrequenzkomponenten der mehreren vorverarbeiteten Bilder; und Erhalten einer fusionierten Luminanzkomponente auf der Basis der fusionierten Hochfrequenzkomponente und der fusionierten Niederfrequenzkomponente und ferner Erhalten eines Ausgangsbildes auf der Basis der fusionierten Luminanzkomponente, der Chrominanzkomponente und der Sättigungskomponente.

8. Bildgebungsverfahren, wobei das Verfahren Folgendes umfasst:
Erhalten von durch ein Objekt reflektiertem Licht durch eine Fotografiervorrichtung;
Aufteilen des erhaltenen Lichts durch eine Lichtteilungsvorrichtung, um mehrere Lichtmengen mit Licht zu erhalten;
Erhalten eines vorverarbeiteten Bildes durch mehrere Sensoren auf der Basis von Licht in einer beliebigen der mehreren Lichtmengen, das der beliebigen einen Lichtmenge entspricht; und
Fusionieren mehrerer vorverarbeiteter Bilder, die den mehreren Lichtmengen entsprechen, um ein Ausgangsbild zu erhalten;
wobei die mehreren Sensoren einen Monochrom-Bildsensor und einen Farb-Bildsensor umfassen und das Verfahren ferner **gekennzeichnet ist durch** Bestimmen, dass eine Szene eine schlecht beleuchtete Szene ist, wenn bestimmt wird, dass ein Verstärkungsfaktor des Farb-Bildsensors größer oder gleich einer voreingestellten Verstärkungsfaktorschwelle ist, und Fusionieren der mehreren vorverarbeiteten Bilder, um ein Ausgangsbild mit niedriger Illuminanz zu erhalten; oder
Bestimmen, dass eine Szene eine sehr dynamische Szene ist, wenn bestimmt wird, dass der Verstärkungsfaktor des Farb-Bildsensors kleiner als die voreingestellte Verstärkungsfaktorschwelle ist, und Fusionieren der mehreren vorverarbeiteten Bilder, um ein Ausgangsbild mit großem Dynamikumfang zu erhalten.

9. Verfahren nach Anspruch 8, wobei das Aufteilen des erhaltenen Lichts, um mehrere Lichtmengen zu erhalten, Folgendes umfasst:
Aufteilen des erhaltenen Lichts auf der Basis von Lichtintensität und/oder eines Lichtspektrums, um die mehreren Lichtmengen zu erhalten.

10. Verfahren nach Anspruch 8, wobei, wenn das erhaltene Licht gänzlich sichtbares Licht ist, das erhaltene Licht durch die Lichtteilungsvorrichtung auf der Basis eines vorgegebenen Anteils geteilt wird, um eine erste Lichtmenge und eine zweite Lichtmenge zu erhalten; oder
wenn das erhaltene Licht sichtbares Licht und Infrarotlicht umfasst, das erhaltene Licht durch die Lichtteilungsvorrichtung geteilt wird, um eine dritte Lichtmenge und eine vierte Lichtmenge zu erhalten, wobei die dritte Lichtmenge Infrarotlicht und sichtbares Licht umfasst und die vierte Lichtmenge sichtbares Licht oder Infrarotlicht und sichtbares Licht ist.

11. Verfahren nach einem der Ansprüche 8 bis 10, wobei das erhaltene Licht sichtbares Licht und Infrarotlicht umfasst; und
das Aufteilen des erhaltenen Lichts durch eine Lichtteilungsvorrichtung, um mehrere Lichtmengen zu erhalten, Folgendes umfasst:
wenn durch einen Sensor bestimmt wird, dass eine Szene eine sehr dynamische Szene ist, Abschneiden des Infrarotlichts aus dem erhaltenen Licht und Teilen des sichtbaren Lichts in dem erhaltenen Licht, um die mehreren Lichtmengen zu erhalten.

12. Verfahren nach einem der Ansprüche 8 bis 10, wobei das erhaltene Licht sichtbares Licht und Infrarotlicht umfasst; und
das Erhalten eines vorverarbeiteten Bildes auf der Basis von Licht in einer beliebigen der mehreren Lichtmengen, das der beliebigen einen Lichtmenge entspricht, Folgendes umfasst:
wenn bestimmt wird, dass eine Szene eine sehr dynamische Szene ist, Abschneiden von Infrarotlicht aus der beliebigen einen Lichtmenge und Erhalten des der beliebigen einen Lichtmenge entsprechenden vorverarbeiteten Bildes auf der Basis von sichtbarem Licht aus der beliebigen einen Lichtmenge; oder
wenn bestimmt wird, dass die Szene eine Entdunstungsszene ist, Abschneiden von sichtbarem Licht aus der beliebigen einen Lichtmenge und Erhalten des der beliebigen einen Lichtmenge entsprechenden vorverarbeiteten Bildes auf der Basis von Infrarotlicht aus der beliebigen einen Lichtmenge.

13. Verfahren nach einem der Ansprüche 8 bis 12, wobei die mehreren vorverarbeiteten Bilder ein Monochrombild und ein Farbbild umfassen; und
das Fusionieren mehrerer vorverarbeiteter Bilder, die den mehreren Lichtmengen entsprechen, um ein Ausgangsbild zu erhalten, Folgendes umfasst:
getrenntes Zerlegen von Luminanzkomponenten der mehreren vorverarbeiteten Bilder in Hochfrequenzkomponenten und Niederfrequenzkomponenten und Zerlegen einer Farbkomponente des Farbbildes der mehreren vorverarbeiteten Bilder in eine Chrominanzkomponente und eine Sättigungskomponente;
Erhalten einer fusionierten Hochfrequenzkomponente auf der Basis der Hochfrequenzkomponenten der mehreren vorverarbeiteten Bilder und Erhalten einer fusionierten Niederfrequenzkomponente auf der Basis der Niederfrequenzkomponenten der mehreren vorverarbeiteten Bilder; und
Erhalten einer fusionierten Luminanzkomponente auf der Basis der fusionierten Hochfrequenzkomponente und der fusionierten Niederfrequenzkomponente und ferner Erhalten eines Ausgangsbildes auf der Basis der fusionierten Luminanzkomponente, der Chrominanzkomponente und der Sättigungskomponente.

## Revendications

1. Appareil d'imagerie, l'appareil d'imagerie comprenant un appareil de photographie (301), un appareil de division de lumière (302), une pluralité de capteurs (3041, 3042), et un appareil de traitement d'images (303),
l'appareil de photographie (301) étant configuré de façon à obtenir une lumière réfléchie par un objet, et à transmettre la lumière obtenue dans l'appareil de division de lumière (302) :
l'appareil de division de lumière (302) étant disposé sur une surface émergente de l'appareil de photographie (301), et étant configuré de façon à diviser, en lumière transmise depuis une pluralité de surfaces émergentes de l'appareil de division de lumière (302), la lumière transmise par l'appareil de photographie (301) dans l'appareil de division de lumière (302) ; la pluralité de capteurs (3041, 3042) étant disposés sur la pluralité de surfaces émergentes de l'appareil de division de lumière (302), et étant configurés de façon à recevoir la lumière transmise depuis des surfaces émergentes correspondantes, et à générer des images prétraitées en se basant sur la lumière reçue ; et
l'appareil de traitement d'images étant connecté à une pluralité de capteurs (3041, 3042), et étant configuré de façon à fusionner les images prétraitées générées par la pluralité de capteurs (3041, 3042) afin d'obtenir une image de sortie ; l'appareil de division de lumière (302) comprenant une première surface émergente et une deuxième surface émergente ; un capteur disposé sur la première surface émergente étant un capteur d'images monochromes (3041), et un capteur disposé sur la deuxième surface émergente étant un capteur d'images en couleur (3042) ;
**caractérisé en ce que**
l'appareil de traitement d'images est configuré en outre de façon à : s'il détermine qu'un gain du capteur d'images en couleur (3042) est supérieur ou égal à un seuil de gain prédéfini, déterminer qu'une scène est une scène à faible lumière, l'appareil de traitement étant configuré de façon à fusionner les images prétraitées afin d'obtenir une image de sortie à faible éclairement ;
ou à, s'il détermine que le gain du capteur d'images en couleur (3042) est inférieur au seuil de gain prédéfini, déterminer qu'une scène est une scène à dynamique étendue, l'appareil de traitement étant configuré de façon à fusionner les images prétraitées afin d'obtenir une image de sortie à plage dynamique étendue.

2. Appareil d'imagerie selon la revendication 1, dans lequel l'appareil de traitement d'images est configuré en outre de façon à régler les gains et/ou la vitesse d'obturation de la pluralité de capteurs (3041, 3042) en se basant sur les images prétraitées générées par la pluralité de capteurs (3041, 3042).

3. Appareil d'imagerie selon la revendication 1, dans lequel l'appareil de division de lumière (302) est configuré spécifiquement de façon à diviser, en se basant sur l'intensité de la lumière et/ou sur un spectre de lumière, en lumière transmise depuis la pluralité de surfaces émergentes de l'appareil de division de lumière, la lumière transmise par l'appareil de photographie dans l'appareil de division de lumière (302).

4. Appareil d'imagerie selon l'une quelconque des revendications 1 et 2, dans lequel si la lumière transmise dans l'appareil de division de lumière (302) est entièrement une lumière visible, l'appareil de division de lumière (302) divise, en se basant sur une proportion spécifiée, en lumière visible transmise depuis la première surface émergente et en lumière visible transmise depuis la deuxième surface émergente, la lumière transmise dans l'appareil de division de lumière (302) ; ou
si la lumière transmise dans l'appareil de division de lumière (302) comprend une lumière visible et une lumière infrarouge, l'appareil de division de lumière (302) divise, en lumière transmise depuis la première surface émergente et en lumière transmise depuis la deuxième surface émergente, la lumière transmise dans l'appareil de division de lumière (302), la lumière transmise depuis la première surface émergente comprenant une lumière infrarouge et une lumière visible, et la lumière transmise depuis la deuxième surface émergente étant une lumière visible, ou une lumière visible et une lumière infrarouge.

5. Appareil d'imagerie selon la revendication 1, la lumière réfléchie par un objet photographié par l'appareil de photographie (301) comprenant une lumière infrarouge et une lumière visible ;
l'appareil d'imagerie comprenant en outre un filtre bloquant la lumière infrarouge (305), le filtre bloquant la lumière infrarouge étant disposé entre une surface incidente de l'appareil de division de lumière (302) et une surface émergente de l'appareil de photographie (301), et le filtre bloquant la lumière infrarouge (305) étant connecté à l'appareil de traitement d'images ; et
l'appareil d'imagerie étant configuré en outre de façon à : dans la scène à dynamique étendue, commander le filtre bloquant la lumière infrarouge (305) afin de bloquer la lumière infrarouge, de manière à ce que toute la lumière transmise dans l'appareil de division de lumière (302) soit une lumière visible ; dans la scène à faible lumière, commander le filtre bloquant la lumière infrarouge (305) pour qu'il transmette la lumière infrarouge et la lumière visible, de manière à ce que la lumière transmise dans l'appareil de division de lumière (302) comprenne une lumière infrarouge et une lumière visible.

6. Appareil d'imagerie selon la revendication 1, la lumière photographiée par l'appareil de photographie (301) comprenant une lumière infrarouge et une lumière visible ; l'appareil d'imagerie comprenant en outre un filtre bloquant la lumière infrarouge (305), le filtre bloquant la lumière infrarouge (305) étant disposé entre la première surface émergente de l'appareil de division de lumière (302) et le capteur d'images monochromes (3041), et le filtre bloquant la lumière infrarouge (305) étant connecté à l'appareil de traitement d'images ; et
l'appareil de traitement d'images étant configuré en outre de façon à : dans la scène à dynamique étendue, commander le filtre bloquant la lumière infrarouge (305) afin de bloquer la lumière infrarouge, de manière à ce que toute la lumière transmise dans le capteur d'images monochromes (3041) soit une lumière visible ; dans la scène à faible lumière, commander le filtre bloquant la lumière infrarouge (305) pour qu'il transmette la lumière infrarouge et la lumière visible, de manière à ce que la lumière transmise dans le capteur d'images monochromes (3041) comprenne une lumière infrarouge et une lumière visible ; et à, dans une scène à débrumage, commander le filtre bloquant la lumière infrarouge (305) pour bloquer la lumière visible, de manière à ce que toute la lumière transmise dans le capteur d'images monochromes (3041) soit une lumière infrarouge.

7. Appareil d'imagerie selon l'une quelconque des revendications 1 à 6, dans lequel la pluralité d'images prétraitées générées par la pluralité de capteurs (3041, 3042) comprend une image monochrome et une image en couleur ; et
l'appareil de traitement d'images est configuré spécifiquement de façon à : décomposer séparément des composantes de luminance de la pluralité d'images prétraitées en composantes haute fréquence et en composantes basse fréquence, et à décomposer des composantes de couleur de l'image en couleur de la pluralité d'images prétraitées en une composante de chrominance et une composante de saturation ; à obtenir une composante haute fréquence fusionnée basée sur les composantes haute fréquence de la pluralité d'images prétraitées, et à obtenir une composante basse fréquence fusionnée basée sur les composantes basse fréquence de la pluralité d'images prétraitées ; et à obtenir une composante de luminance fusionnée basée sur la composante haute fréquence fusionnée et sur la composante basse fréquence fusionnée, et à obtenir en outre une image de sortie basée sur la composante de luminance fusionnée, sur la composante de chrominance et sur la composante de saturation.

8. Procédé d'imagerie, le procédé comprenant :
l'obtention, par un appareil de photographie, de lumière réfléchie par un objet ;
la division, par un appareil de division de lumière, de la lumière obtenue afin d'obtenir une pluralité de jeux de lumière avec de la lumière ;
l'obtention, par une pluralité de capteurs, en se basant sur la lumière dans l'un quelconque de la pluralité de jeux de lumière, d'une image prétraitée correspondant à l'un quelconque jeu de lumière; et
le fusionnement d'une pluralité d'images prétraitées correspondant à la pluralité de jeux de lumière afin d'obtenir une image de sortie ;
la pluralité de capteurs comprenant un capteur d'images monochromes et un capteur d'images en couleur, le procédé étant **caractérisé en outre par** la détermination qu'une scène est une scène à faible lumière s'il est déterminé qu'un gain du capteur d'images en couleur est supérieur ou égal à un seuil de gain prédéfini,
et le fusionnement de la pluralité d'images prétraitées afin d'obtenir une image de sortie à faible éclairement ; ou par
la détermination qu'une scène est une scène à dynamique étendue s'il est déterminé que le gain du capteur d'images en couleur est inférieur au seuil de gain prédéfini, et
le fusionnement de la pluralité d'images prétraitées afin d'obtenir une image de sortie à plage dynamique étendue.

9. Procédé selon la revendication 8, dans lequel la division de la lumière obtenue afin d'obtenir une pluralité de jeux de lumière comprend :
la division de la lumière obtenue en se basant sur l'intensité de la lumière et/ou sur un spectre de lumière afin d'obtenir la pluralité de jeux de lumière.

10. Procédé selon la revendication 8, dans lequel, si la lumière obtenue est entièrement une lumière visible, la lumière obtenue est divisée, par l'appareil de division de lumière, en se basant sur une proportion spécifiée, afin d'obtenir un premier jeu de lumière et un deuxième jeu de lumière ; ou
si la lumière obtenue comprend une lumière visible et une lumière infrarouge, la lumière obtenue est divisée, par l'appareil de division de lumière, afin d'obtenir un troisième jeu de lumière et un quatrième jeu de lumière, le troisième jeu de lumière comprenant une lumière infrarouge et une lumière visible, et le quatrième jeu de lumière étant une lumière visible, ou une lumière infrarouge et une lumière visible.

11. Procédé selon l'une quelconque des revendications 8 à 10, dans lequel la lumière obtenue comprend une lumière visible et une lumière infrarouge ; et
la division, par un appareil de division de lumière, de la lumière obtenue afin d'obtenir une pluralité de jeux de lumière comprend :
s'il est déterminé, par un capteur, qu'une scène est une scène à dynamique étendue, le blocage de la lumière infrarouge de la lumière obtenue, et la division de la lumière visible dans la lumière obtenue afin d'obtenir une pluralité de jeux de lumière.

12. Procédé selon l'une quelconque des revendications 8 à 10, dans lequel la lumière obtenue comprend une lumière visible et une lumière infrarouge ; et
l'obtention, en se basant sur la lumière dans l'un quelconque de la pluralité de jeux de lumière, d'une image prétraitée correspondant à l'un quelconque jeu de lumière comprend :
s'il est déterminé qu'une scène est une scène à dynamique étendue, le blocage de la lumière infrarouge de l'un quelconque jeu de lumière, et l'obtention, en se basant sur la lumière visible provenant de l'un quelconque jeu de lumière, de l'image prétraitée correspondant à l'un quelconque jeu de lumière ; ou
s'il est déterminé que la scène est une scène à débrumage, le blocage de la lumière visible de l'un quelconque jeu de lumière, et l'obtention, en se basant sur la lumière infrarouge provenant de l'un quelconque jeu de lumière, de l'image prétraitée correspondant à l'un quelconque jeu de lumière.

13. Procédé selon l'une quelconque des revendications 8 à 12, dans lequel la pluralité d'images prétraitées comprend une image monochrome et une image en couleur ; et le fusionnement d'une pluralité d'images prétraitées correspondant à la pluralité de jeux de lumière afin d'obtenir une image de sortie comprend :
la décomposition séparée de composantes de luminance de la pluralité d'images prétraitées en des composantes haute fréquence et des composantes basse fréquence, et la décomposition d'une composante de couleur de l'image en couleur de la pluralité d'images prétraitées en une composante de chrominance et une composante de saturation ;
l'obtention d'une composante haute fréquence fusionnée basée sur les composantes haute fréquence de la pluralité d'images prétraitées, et l'obtention d'une composante basse fréquence fusionnée basée sur les composantes basse fréquence de la pluralité d'images prétraitées ; et
l'obtention d'une composante de luminance fusionnée basée sur la composante haute fréquence fusionnée et sur la composante basse fréquence fusionnée, et l'obtention en outre d'une image de sortie basée sur la composante de luminance fusionnée, sur la composante de chrominance et sur la composante de saturation.
